# EUROPEAN PATENT APPLICATION

(11) **EP 4 797 401 A1**
(43) Date of publication of application: **26.08.2026**
(21) Application number: 25226844.6
(22) Date of filing: 23.12.2025
(51) Int. Cl.: H01M 50/204, H01M 50/502, H01M 50/514, H01R 4/28

(54) **SECONDARY BATTERY AND BATTERY PACK INCLUDING THE SAME**

(30) Priority: 20.02.2025 KR 20250022335
(71) Applicant: SAMSUNG SDI CO., LTD., Yongin-si, Gyeonggi-do 17084 (KR)
(72) Inventor: LEE, Kang Hee, 16678 Suwon-si (KR)
(74) Representative: Marks & Clerk LLP

(57) **Abstract**

A secondary battery, including a case, an electrode assembly accommodated in the case, a terminal connected to the electrode assembly, a cap plate facing the electrode assembly, and an insulating member between the cap plate and the electrode assembly, the insulating member including an accommodating groove in which the terminal is accommodated.

## Description

### BACKGROUND

### 1. Field

The present disclosure relates to a secondary battery and a battery pack including the same.

### 2. Description of the Related Art

Secondary batteries are batteries that can be charged and discharged unlike primary batteries that cannot be recharged. Low-capacity secondary batteries are used in small portable electronic devices such as smartphones, feature phones, laptop computers, digital cameras, and camcorders, and high-capacity batteries are widely used as power sources for driving a motor, power storage batteries, and the like in hybrid vehicles, electric vehicles, and the like. Such secondary batteries include an electrode assembly including a positive electrode and a negative electrode, a case which accommodates the electrode assembly, a terminal connected to the electrode assembly, etc.

A secondary battery may be used as a battery pack formed by a plurality of unit battery cells connected in series and/or parallel to provide high energy density. The battery pack may be formed by connecting terminals of the plurality of unit battery cells to each other to match the required power amount and implement, for example, a high-output secondary battery for an electric vehicle.

The above-described information disclosed in the technology that forms the background of the present disclosure is provided to improve understanding of the background of the present disclosure, and thus may include information that does not constitute the related art.

### SUMMARY

Embodiments include a secondary battery, including a case, an electrode assembly accommodated in the case, a terminal connected to the electrode assembly, a cap plate facing the electrode assembly, and an insulating member between the cap plate and the electrode assembly, the insulating member including an accommodating groove in which the terminal is accommodated.

The secondary battery may further include a movable plate inside the accommodating groove, the movable plate being movably coupled to the terminal, and an elastic member inside the accommodating groove to elastically support the movable plate.

The secondary battery may further include a gasket seated on an inner side of the accommodating groove, the gasket supporting the elastic member.

The secondary battery may further include a first sealing member coupled to the terminal, the first sealing member being between the gasket and the movable plate.

The secondary battery may further include a second sealing member between the terminal and the insulating member, the second sealing member facing the electrode assembly.

The secondary battery may further include a third sealing member between the gasket and the terminal and between the insulating member and the terminal.

The secondary battery may further include a thermal insulating layer on an inner surface of the accommodating groove.

The cap plate may have an opening communicating with an inside of the accommodating groove.

An edge of the opening may include a step portion, the step portion being elastically deformable.

The step portion may include an inclined surface inclined at a predetermined angle toward the inside of the accommodating groove.

The cap plate may include a first plate in the insulating member, the first plate being movable, and a second plate facing the first plate, the second plate being spaced apart from the first plate and movable in the insulating member.

The secondary battery may further include a first elastic member between the first plate and the insulating member, the first elastic member elastically supporting the first plate, and a second elastic member between the second plate and the insulating member, the second elastic member elastically supporting the second plate.

A separation distance between the first plate and the second plate may vary depending on a direction of movement of the first plate and a direction of movement of the second plate.

The first plate may include a first inclined surface inclined at a predetermined angle toward an inside of the accommodating groove, and the second plate may include a second inclined surface inclined at a predetermined angle toward the inside of the accommodating groove.

Embodiments include a battery pack, including a housing, a plurality of secondary batteries inside the housing, and a busbar connecting the plurality of secondary batteries, wherein each of the secondary batteries includes a case, an electrode assembly accommodated in the case, a terminal connected to the electrode assembly, a cap plate facing the electrode assembly, and an insulating member between the cap plate and the electrode assembly, the insulating member including an accommodating groove in which the terminal is accommodated. Each of the secondary batteries may be as defined previously.

The busbar may include a busbar coupling portion in the accommodating groove, the busbar coupling portion being coupled to the terminal and elastically deformable, and a busbar connecting portion extending from the busbar coupling portion, the busbar connecting portion connecting a neighboring busbar coupling portion.

The busbar coupling portion may include an insertion portion, the terminal being in the insertion portion.

The busbar coupling portion may include a guide surface guiding a movement of the busbar coupling portion, the busbar coupling portion being in the accommodating groove.

The busbar connecting portion may include a first connecting portion extending from the busbar coupling portion, and a second connecting portion extending from the first connecting portion, the second connecting portion being spaced apart from the busbar coupling portion.

The first connecting portion may be inclined and extend at a predetermined angle toward the second connecting portion.

At least some of the above and other features of the invention are set out in the claims.

### BRIEF DESCRIPTION OF THE DRAWINGS

Features will become apparent to those of ordinary skill in the art by describing embodiments with reference to the attached drawings, in which:
FIG. 1 is an exploded perspective view schematically illustrating a battery pack according to a first embodiment of the present disclosure;
FIG. 2 is a perspective view schematically illustrating a secondary battery according to the first embodiment of the present disclosure;
FIG. 3 is a cross-sectional view schematically illustrating the secondary battery according to the first embodiment of the present disclosure;
FIG. 4 is a partially enlarged cross-sectional view schematically illustrating a configuration of the secondary battery and a busbar according to the first embodiment of the present disclosure;
FIGS. 5 and 6 are partially enlarged cross-sectional views schematically illustrating a coupling process between the secondary battery and the busbar according to the first embodiment of the present disclosure;
FIG. 7 is a partially enlarged cross-sectional view schematically illustrating a configuration of a secondary battery and a busbar according to a second embodiment of the present disclosure;
FIG. 8 is a partially enlarged cross-sectional view schematically illustrating a state in which the secondary battery and the busbar according to the second embodiment of the present disclosure are coupled;
FIG. 9 is a partially enlarged cross-sectional view schematically illustrating a configuration of a secondary battery and a busbar according to a third embodiment of the present disclosure; and
FIGS. 10 and 11 are partially enlarged cross-sectional views schematically illustrating a coupling process between the secondary battery and the busbar according to the third embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

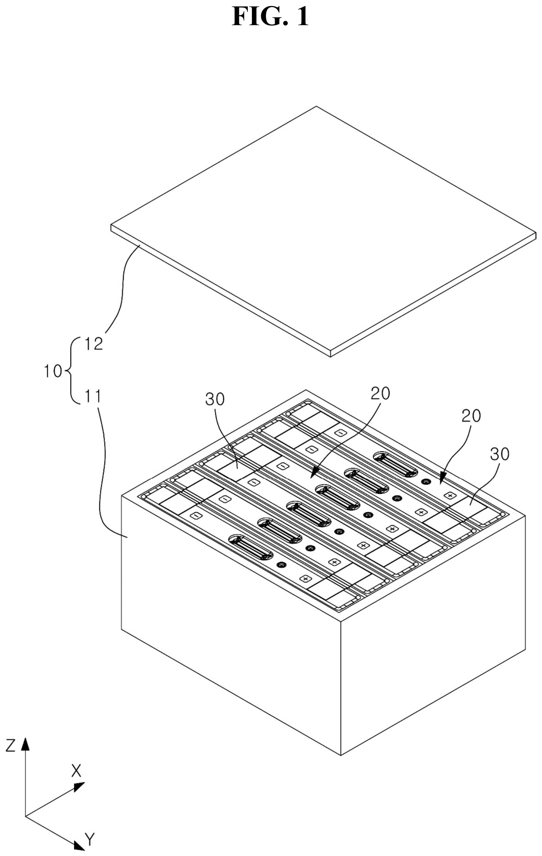

FIG. 1 is an exploded perspective view schematically illustrating a battery pack according to a first embodiment of the present disclosure.

Referring to FIG. 1, the battery pack according to the first embodiment of the present disclosure may include a housing 10, a secondary battery 20, and a busbar 30.

The housing 10 forms an approximate exterior of the battery pack and may provide a space for accommodating the secondary battery 20. The housing 10 may include a housing body 11 and a housing cover 12.

The housing body 11 may be formed to have the shape of a box with an empty interior and one open side (upper side based on FIG. 1). A cross-sectional shape of the housing body 11 may be designed to have various shapes such as a circular shape, an oval shape, a polygonal shape, and the like.

The housing cover 12 may be coupled to the housing body 11 and close the interior space of the housing body 11. For example, the housing cover 12 may be formed to have a substantial plate-like shape and may be disposed to face the open side of the housing body 11.

The housing cover 12 may be fixed to the housing body 11 by various types of coupling methods such as bolting, welding, fitting, and the like.

The secondary battery 20 may function as a unit structure that stores and supplies power in the battery pack. The secondary battery 20 may be disposed inside the housing 10.

Hereinafter, an example in which the secondary battery 20 is a prismatic lithium-ion secondary battery will be described. However, the present disclosure is not limited thereto, and the secondary battery 20 may be a lithium polymer battery or a cylindrical battery.

A plurality of the secondary batteries 20 may be provided. The plurality of the secondary batteries 20 may be arranged in two or more rows in at least one of a longitudinal direction (an X-axis direction based on FIG. 1) or a width direction (a Y-axis direction based on FIG. 1) of the housing 10.

A first direction according to the present embodiment may mean an X-axis direction based on FIG. 1, that is, the longitudinal direction of the housing 10, a second direction may mean a Y-axis direction based on FIG. 1, that is, the width direction of the housing 10, and a third direction may mean a Z-axis direction based on FIG. 1, that is, a height direction of the housing 10.

In FIG. 1, the plurality of the secondary batteries 20 are illustrated as being arranged in six rows in the longitudinal direction of the housing 10 as an example (e.g., one row of six batteries in the width direction), but the arrangement of the plurality of the secondary batteries 20 may be designed to have various forms.

The plurality of the secondary batteries 20 may be disposed in parallel to each other. The number of the plurality of the secondary batteries 20 may be designed in various ways depending on the size, shape, and the like of the housing 10.

The plurality of the secondary batteries 20 may be electrically connected by the busbar 30. The busbar 30 may be disposed between the housing cover 12 and the secondary battery 20. For example a busbar may connect two terminals, or more than two terminals, of adjacent batteries.

A plurality of the busbars 30 may be provided. Each of the plurality of the busbars 30 may connect a pair of adjacent batteries of the plurality of the secondary batteries 20 in series or parallel.

The busbar 30 may be formed of an electrically conductive material such as copper, aluminum, or nickel, etc. The specific shape of the busbar 30 may be designed to have various shapes that can electrically connect adjacent of the plurality of the secondary batteries 20.

The plurality of the busbars 30 may be supported inside the housing 10 by a busbar holder. The busbar holder may be formed to have the form of a flat plate. The busbar holder may be disposed between the housing cover 12 and the secondary battery 20.

The busbar 30 may be fixed to the busbar holder by various types of coupling methods such as fitting, bolting, injection joining, and the like. The busbar holder is configured to include an electrically insulating polymer compound material.

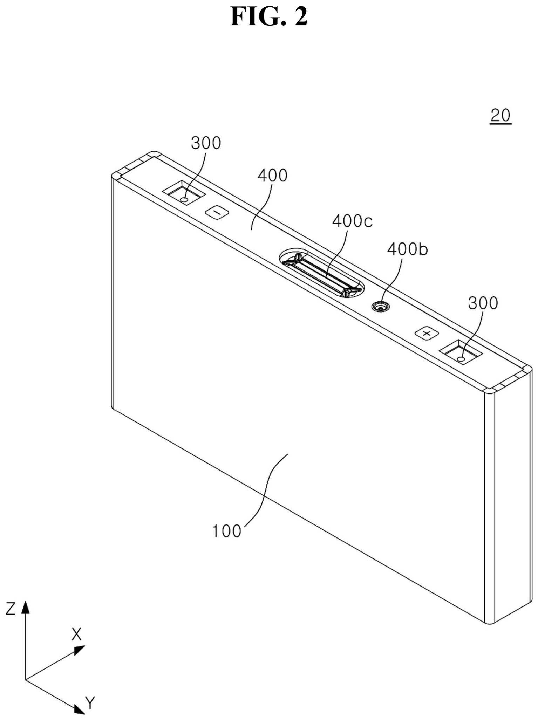

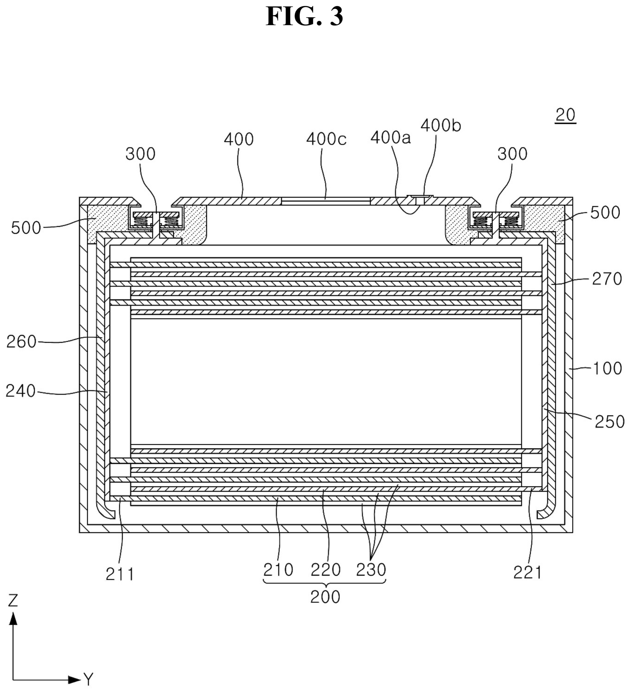

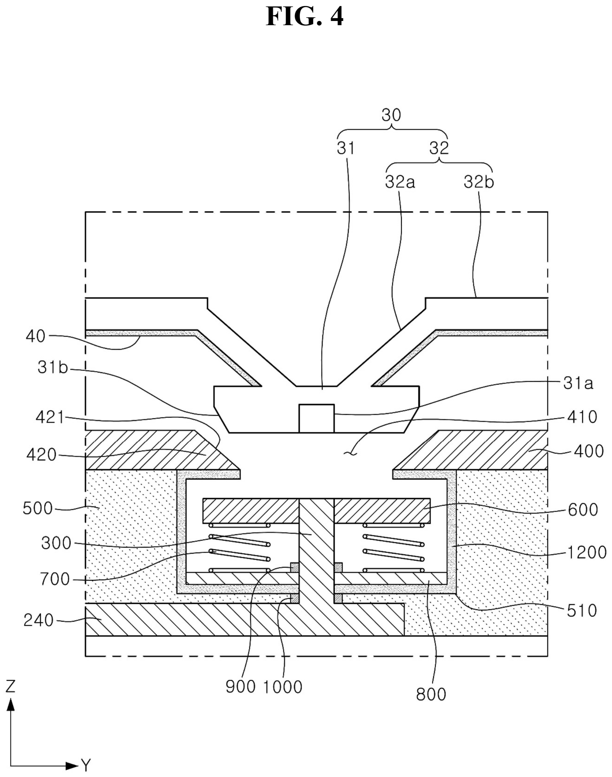

FIG. 2 is a perspective view schematically illustrating a secondary battery according to the first embodiment of the present disclosure, FIG. 3 is a cross-sectional view schematically illustrating the secondary battery according to the first embodiment of the present disclosure, and FIG. 4 is a partially enlarged cross-sectional view schematically illustrating a configuration of the secondary battery and the busbar according to the first embodiment of the present disclosure.

Referring to FIGS. 1 to 4, the secondary battery 20 according to the first embodiment of the present disclosure may include a case 100, an electrode assembly 200, a terminal 300, a cap plate 400 and an insulating member 500.

The case 100 may form an overall exterior of the secondary battery 20 and may be formed of a conductive metal such as aluminum, an aluminum alloy, or nickel-plated steel. Additionally, the case 100 may provide a space in which the electrode assembly 200 is accommodated.

The case 100 may be formed to have the shape of a box with an empty interior that and one open side (upper side based on FIG. 3). For example, the open side of the case 100 may be disposed to face upward (Z-axis direction based on FIG. 3) based on FIG. 3.

The electrode assembly 200 may be accommodated inside the case 100. The electrode assembly 200 may be wound by interposing a separator 230, which is an insulator, between a positive electrode 210 and a negative electrode 220.

The positive electrode 210 and the negative electrode 220 may include a coated portion, which is an area in which an active material is applied to a current collector formed of a thin metal foil, and uncoated portions 211 and 221, which are areas in which the active material is not coated.

The positive electrode 210 and the negative electrode 220 according to the present embodiment may be wound with the separator 230, which is an insulator, interposed therebetween. However, the electrode assembly 200 may have a structure in which a positive electrode 210 and a negative electrode 220, which are formed of a plurality of sheets, are alternately stacked with a separator 230 interposed therebetween.

The terminal 300 may be connected to the electrode assembly 200. The terminal 300 may include a conductive material. The terminal 300 may be electrically connected to a current collector including a first current collector 240 and a second current collector 250 (hereinafter, referred to as positive and negative electrode current collectors) welded to a positive electrode uncoated portion 211 or a negative electrode uncoated portion 221.

For example, the terminal 300 and the positive and negative electrode current collectors 240 and 250 may be joined by welding. However, the terminal 300 and the positive and negative electrode current collectors 240 and 250 may be formed by being integrally joined.

The terminal 300 may be disposed on an upper side (based on FIG. 3) of the secondary battery 20. The terminal 300 may be formed to have a form extending in a direction parallel to the third direction. A cross-sectional shape of the terminal 300 may be designed to have various shapes such as a circular shape, an oval shape, a polygonal shape, and the like.

The terminal 300 may not protrude from an upper surface (based on FIG. 3) of the secondary battery 20. An upper end height of the terminal 300 parallel to the third direction may be lower than a height of the upper surface of the secondary battery 20 orthogonal to the third direction.

A pair of the terminal 300 may be provided. The pair of the terminal 300 may have different polarities. One terminal of the pair of the terminal 300 may have a positive polarity, and the other terminal of the pair of the terminal 300 may have a negative polarity.

The pair of the terminal 300 may be disposed symmetrically on both sides of the secondary battery 20. The pair of the terminal 300 may be disposed to be spaced apart from each other in the second direction.

The cap plate 400 may be coupled to the case 100. The cap plate 400 is made of a thin plate and may cover the opening of the case 100. The cap plate 400 may be disposed to face the electrode assembly 200 in the third direction. The cap plate 400 may be fixed to the case 100 by various types of coupling methods such as bolting, welding, fitting, and the like.

The cap plate 400 may be made of a conductive material. Here, the terminal 300, which is electrically connected to the positive electrode 210 or the negative electrode 220, may not protrude from the cap plate 400. The upper end height of the terminal 300 parallel to the third direction may be lower than a height of an upper surface of the cap plate 400 parallel to the third direction.

The cap plate 400 may be formed with an electrolyte inlet 400a in which a sealing plug 400b may be installed, and a vent 400c formed with a notch may be installed.

The vent 400c may open and close in response to changes in internal pressure of the case 100. That is, the vent 400c may seal the case 100 by maintaining the closed state during normal operation of the electrode assembly 200.

The vent 400c opens when the internal pressure of the case 100 rises above a set level due to overcharging or a fire, and allows emissions such as flames and gas from the inside of the case 100 to be discharged to the outside of the case 100.

The cap plate 400 according to the present embodiment may be provided with an opening 410 (see FIG. 4). The opening 410 may be formed to pass through the cap plate 400 in the third direction.

The opening 410 formed in the cap plate 400 may communicate with (e.g., may be in fluid communication with) the interior of an accommodating groove 510 formed in the insulating member 500. The opening 410 and the accommodating groove 510 may be disposed to face each other in the third direction. The terminal 300 may be recognized (or visible) from the outside through the opening 410. A central axis of the opening 410, which is parallel to the third direction, and a central axis of the terminal 300, which is parallel to the third direction, may be disposed on the same axis.

The cap plate 400 according to the present embodiment may be provided with a step portion (or inner rim) 420. The step portion 420 may be provided at an edge of the opening 410. The step portion 420 may be formed along the edge of the opening 410 and extend from the edge of the opening 410 toward the central axis of the terminal 300. The step portion 420 may cover an upper edge of the accommodating groove 510.

The step portion 420 may be elastically deformable. The step portion 420 may be deformed by the pressure of the busbar 30 inserted into the interior of the accommodating groove 510.

The step portion 420 according to the present embodiment may be provided with an inclined surface 421. The inclined surface 421 is provided at an end portion of the step portion 420, e.g. to define a chamfered edge for the inner rim, and may be formed to be inclined at a predetermined angle (e.g., at an oblique angle with respect to an upper surface of the insulating member 500) toward an inner side of the accommodating groove 510. The inclined surface 421 may come into contact with the busbar as the busbar 30 is inserted into the interior of the accommodating groove 510 and it may thus guide the movement of the busbar 30 as it is inserted into the accommodating groove 510.

The insulating member 500 may be disposed between the cap plate 400 and the electrode assembly 200. The cap plate 400 and the insulating member 500 may be formed by being integrally joined.

The insulating member 500 may be provided with the accommodating groove 510 in which the terminal 300 is accommodated. The accommodating groove 510 may be formed by being recessed into an outer surface (upper surface based on FIG. 4) of the insulating member 500 facing the cap plate 400. An open side of the accommodating groove 510 may be disposed to face the opening 410 in the third direction. Accordingly, the interior of the accommodating groove 510 and the opening 410 may communicate with each other.

The terminal 300 may be disposed in the interior of the accommodating groove 510. The terminal 300 may be disposed in the interior of the accommodating groove 510 by passing through the insulating member 500 in the third direction.

The terminal 300 may be disposed to be spaced apart from an inner surface of the accommodating groove 510. The terminal 300 may be positioned at a center portion of the accommodating groove 510. The upper end height of the terminal 300 parallel to the third direction may be lower than a height of an upper surface of the insulating member 500 parallel to the third direction.

One end of a separating member, which may be installed to face one side of the electrode assembly 200, may be installed between the insulating member 500 and the terminal 300 according to the present embodiment. The separating member may include a first separating member 260 and a second separating member 270.

Therefore, one end of the first separating member 260 and one end of the second separating member 270, which may be installed to face one side of the electrode assembly 200, may be installed between the insulating member 500 and the terminal 300.

The terminal 300, which is welded to each of the positive electrode current collector 240 and the negative electrode current collector 250, may be coupled to the insulating member 500 and the one end of each of the first separating member 260 and the second separating member 270.

The secondary battery 20 according to the present embodiment may further include a thermal insulating layer 1200.

The thermal insulating layer 1200 may be provided on the inner surface of the accommodating groove 510. The thermal insulating layer 1200 may be an insulation sheet, an insulation film, an insulation panel, etc. The thermal insulating layer 1200 may be fixed to bottom and side surfaces of the accommodating groove 510 by various coupling methods such as bonding, adhesion, and joining, and may be fixed to an upper surface of the accommodating groove 510, that is, a lower surface of the step portion 420.

The secondary battery 20 according to the present embodiment may further include a movable plate 600, an elastic member 700, and a gasket 800.

The movable plate 600 may be disposed inside the accommodating groove 510. The movable plate 600 may be disposed to be spaced apart from the inner surface of the accommodating groove 510. The movable plate 600 may be formed to have a substantial plate-like shape.

The movable plate 600 may be movably coupled to the terminal 300. The terminal 300 may pass through a center portion of the movable plate 600. That is, the terminal 300 may pass through the center portion of the movable plate in the third direction. The movable plate 600 may be slidably coupled to the terminal 300.

The movable plate 600 may come into contact with the busbar 30. The movable plate 600 may move in an axial direction of the terminal 300, that is, a direction parallel to the third direction, by the pressure of the busbar 30.

An area of the movable plate 600 may be formed to be larger than an area of the opening 410 formed in the cap plate 400. Accordingly, the movable plate 600 may be prevented from being separated from the accommodating groove 510 to the outside through the opening 410 due to interference with the step portion 420.

The elastic member 700 may be disposed inside the accommodating groove 510. The elastic member 700 may be disposed between the movable plate 600 and the gasket 800. The elastic member 700 may elastically support the movable plate 600 while being seated on the gasket 800. The elastic member 700 may be compressed and deformed according to the movement of the movable plate 600. The elastic member 700 according to the present embodiment may be a coil spring.

The gasket 800 may be disposed inside the accommodating groove 510. The gasket 800 may be disposed between the movable plate 600 and the thermal insulating layer 1200. The gasket 800 may be seated on the thermal insulating layer 1200 to support the elastic member 700.

The terminal 300 may pass through a center portion of the gasket 800. That is, the terminal 300 may pass through the center portion of the gasket 800 in the third direction. The gasket 800 may be fixed to the terminal 300. The gasket 800 may include materials such as elastically deformable rubber, silicone, plastic, and the like.

The secondary battery 20 according to the present embodiment may include a first sealing member 900 and a second sealing member 1000.

The first sealing member 900 may be coupled to the terminal 300. The first sealing member 900 may be disposed inside the accommodating groove 510. The first sealing member 900 may be disposed between the gasket 800 and the movable plate 600. The first sealing member 900 may be provided to surround a perimeter of the terminal 300 and seated on the gasket 800.

The first sealing member 900 may include materials such as elastically deformable rubber, silicone, plastic, and the like. The first sealing member 900 may be an O-ring.

The second sealing member 1000 may be coupled to the terminal 300. The second sealing member 1000 may be provided to surround the perimeter of the terminal 300. The second sealing member 1000 may be disposed to be spaced apart from the first sealing member 900. The first sealing member 900 may be disposed to be spaced apart from the second sealing member 1000 in the third direction.

The second sealing member 1000 may be disposed on an outer side of the accommodating groove 510. The second sealing member 1000 may be interposed between the terminal 300 and the insulating member 500, and disposed to face the electrode assembly 200.

The second sealing member 1000 may include materials such as elastically deformable rubber, silicone, plastic, and the like. The second sealing member 1000 may be an O-ring.

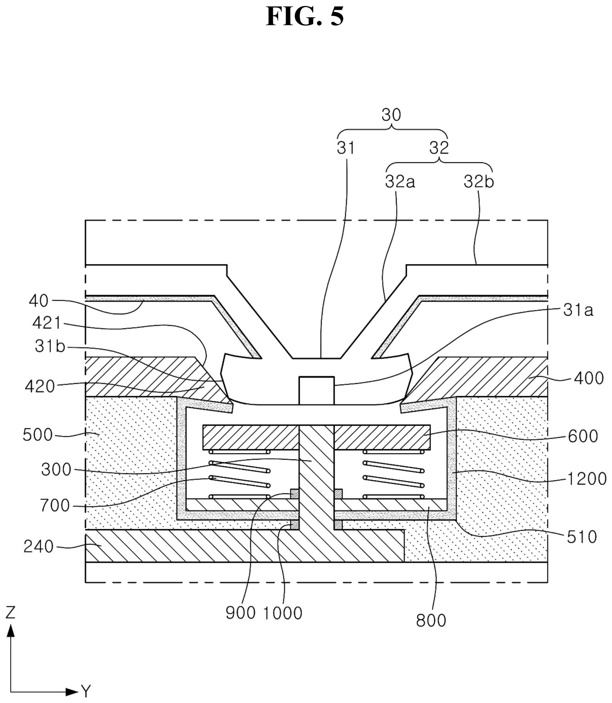

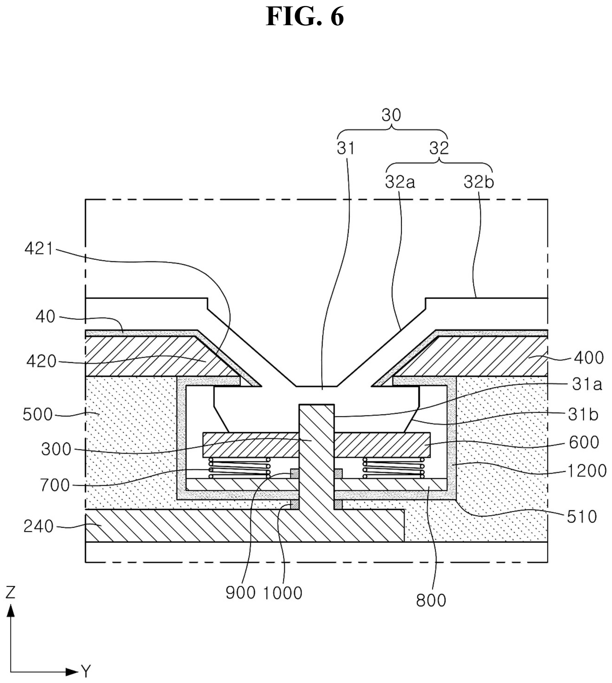

FIGS. 5 and 6 are partially enlarged cross-sectional views schematically illustrating a coupling process between the secondary battery and the busbar according to the first embodiment of the present disclosure.

Referring to FIGS. 4 to 6, the busbar 30 according to the present embodiment may include a busbar coupling portion 31 and a busbar connecting portion 32.

The busbar coupling portion 31 may be inserted into the accommodating groove 510 and coupled to the terminal 300. The busbar coupling portion 31 may be formed to have a substantial plate-like shape.

The busbar coupling portion 31 may be disposed to face the movable plate 600. The busbar coupling portion 31 and the movable plate 600 may be disposed to face each other in the third direction.

An area of the busbar coupling portion 31 may be formed to be larger than an area of the opening 410 formed in the cap plate 400. Accordingly, the busbar coupling portion 31 interferes with the step portion 420 when inserted into the accommodating groove 510, and after being inserted into the accommodating groove 510, the busbar coupling portion 31 may be prevented from being separated to the outside from the accommodating groove 510 through the opening 410 due to the interference of the step portion 420.

The busbar coupling portion 31 may be elastically deformable. When the busbar coupling portion 31 is pressed into the interior of the accommodating groove 510 while an edge of the busbar coupling portion 31 is seated on the step portion 420, the edge of the busbar coupling portion 31 is bent and deformed in a direction opposite to a pressing direction, that is, the third direction, due to the interference of the step portion 420, and the step portion 420 is bent and deformed in the pressing direction of the busbar coupling portion 31, that is, a direction opposite to the third direction, so that the busbar coupling portion 31 may easily enter the interior of the accommodating groove 510.

When the busbar coupling portion 31 is inserted into the interior of the accommodating groove 510, the edge of the busbar coupling portion 31 and the step portion 420, which are bent and deformed, may elastically restore to their original shapes.

The busbar coupling portion 31 according to the present embodiment may be provided with a guide surface 31b. The guide surface 31b may be provided on the edge of the busbar coupling portion 31 and formed to be inclined at a predetermined angle toward the inside of the accommodating groove 510. It thus may also be chamfered.

An inclination direction of the guide surface 31b and an inclination direction of the inclined surface 421 formed on the step portion 420 may be directed in the same direction. The guide surface 31b of the busbar coupling portion 31 may come into contact with the inclined surface 421 of the step portion 420.

The guide surface 31b may guide the movement of the busbar coupling portion 31, which is inserted into the interior of the accommodating groove 510, by slidably moving along the inclined surface 421 formed on the step portion 420.

The busbar coupling portion 31, which is inserted into the interior of the accommodating groove 510, may come into contact with the movable plate 600 and press the movable plate 600. Due to the pressing by the busbar coupling portion 31, the movable plate 600 moves in the direction opposite to the third direction along the terminal 300, and the elastic member 700 may be compressed by the pressing of the movable plate 600 according to the movement of the movable plate 600.

The busbar coupling portion 31, which is seated on the movable plate 600 and presses the movable plate 600, may be coupled to the terminal 300 and electrically connected to the terminal 300.

The busbar coupling portion 31 according to the present embodiment may be provided with an insertion portion 31a into which the terminal 300 is inserted.

The insertion portion 31a may be disposed to face the terminal 300. The insertion portion 31a and the terminal 300 may be disposed to face each other in the third direction. The insertion portion 31a may be disposed in a center portion of the busbar coupling portion 31. The central axis of the busbar coupling portion 31, which is parallel to the third direction, and the central axis of the terminal 300, which is parallel to the third direction, may be disposed on the same axis.

The insertion portion 31a may be formed in the form of a groove that is recessed into an outer surface (bottom surface based on FIG. 4) of the busbar coupling portion 31 facing the terminal 300, or in the form of a hole that passes through the busbar coupling portion 31 in the third direction.

The busbar connecting portion 32 may extend from the busbar coupling portion 31 and may be connected to an adjacent of the busbar coupling portion 31. The busbar connecting portion 32 may be connected to the busbar coupling portion 31, which is coupled to the terminal 300 of an adjacent of the secondary battery 20.

The busbar connecting portion 32 may extend from the outer surface (upper surface based on FIG. 4) of the busbar coupling portion 31 toward an outer side (upper side based on FIG. 4) of the secondary battery 20.

When the busbar coupling portion 31 is inserted into the interior of the accommodating groove 510, the busbar connecting portion 32 may come into contact the cap plate 400. That is, the busbar connecting portion 32 may be seated on the cap plate 400.

The busbar connecting portion 32 may further include an insulation layer 40. The insulation layer 40 is provided on an outer surface (bottom surface based on FIG. 4) of the busbar connecting portion 32 facing the cap plate 400 so as to insulate between the busbar connecting portion 32 and the cap plate 400.

The busbar connecting portion 32 according to the present embodiment may include a first connecting portion 32a and a second connecting portion 32b.

The first connecting portion 32a may extend from the busbar coupling portion 31. The first connecting portion 32a may be inclined at a predetermined angle and extend from the busbar coupling portion 31 toward the second connecting portion 32b. An inclination direction of the first connecting portion 32a may be the same as the inclination direction of the inclined surface 421 formed on the step portion 420.

The second connecting portion 32b may extend from the first connecting portion 32a. The second connecting portion 32b may extend from an end portion of the first connecting portion 32a in a direction parallel to the second direction.

The second connecting portion 32b may be spaced apart from the busbar coupling portion 31. The second connecting portion 32b and the busbar coupling portion 31 may be spaced apart from each other in a direction parallel to the third direction.

When the busbar coupling portion 31 is inserted into the interior of the accommodating groove 510, the first connecting portion 32a may be disposed to face the inclined surface 421 of the step portion 420, and the second connecting portion 32b may be disposed to face the cap plate 400 in the third direction.

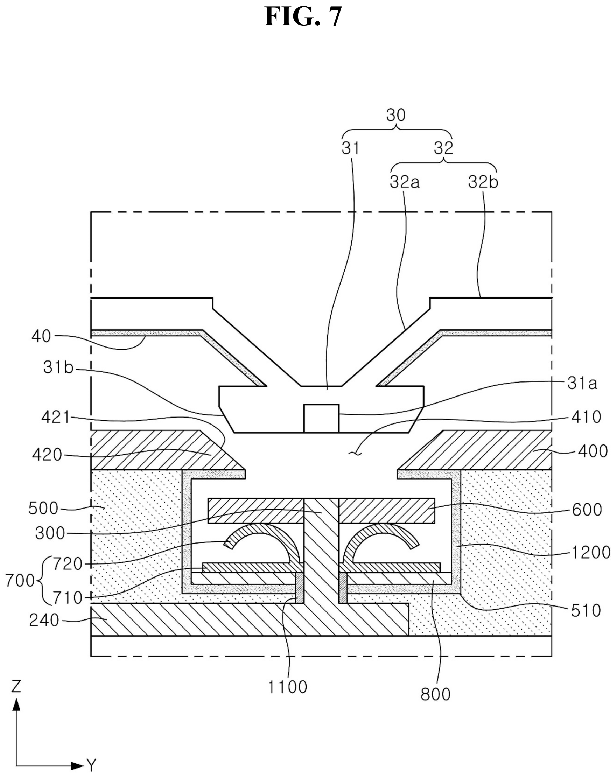

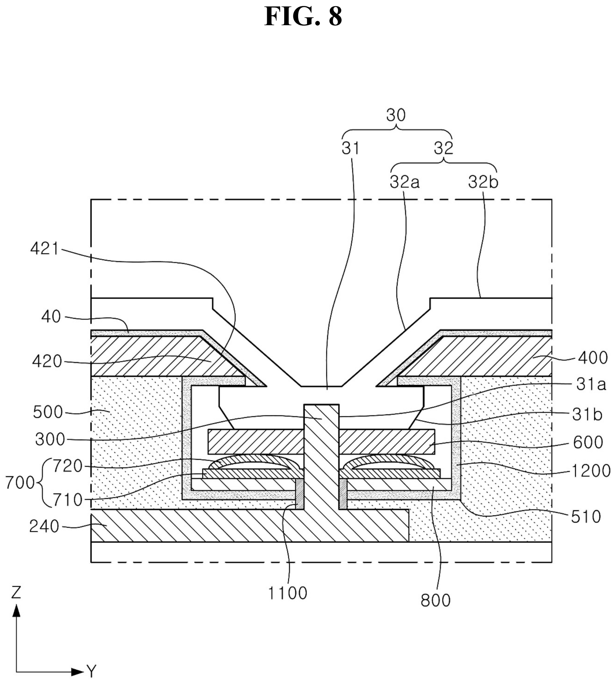

FIG. 7 is a partially enlarged cross-sectional view schematically illustrating a configuration of a secondary battery and a busbar according to a second embodiment of the present disclosure, and FIG. 8 is a partially enlarged cross-sectional view schematically illustrating a state in which the secondary battery and the busbar according to the second embodiment of the present disclosure are coupled.

Referring to FIGS. 7 and 8, the battery pack according to the second embodiment of the present disclosure may include a housing 10, a secondary battery 20, and a busbar 30.

In describing the battery pack according to the second embodiment of the present disclosure, other embodiments of the elastic member 700 and a third sealing member 1100 that are not described in the battery pack according to the first embodiment of the present disclosure will be described.

For the remaining configuration of the battery pack according to the second embodiment of the present disclosure, the description of the battery pack according to the first embodiment of the present disclosure may be applied as is.

The elastic member 700 may be disposed inside the accommodating groove 510. The elastic member 700 may be disposed between the movable plate 600 and the gasket 800 to elastically support the movable plate 600.

The elastic member 700 according to the present embodiment may include a main body portion 710 and a deformable portion 720.

The main body portion 710 may be formed to have a substantial plate-like shape. The main body portion 710 may be seated on the gasket 800. The main body portion 710 may be disposed to face the movable plate 600. The main body portion 710 and the movable plate 600 may be disposed to be spaced apart from each other in the third direction.

The deformable portion 720 may be disposed between the main body portion 710 and the movable plate 600. The deformable portion 720 may be formed to have a curved shape. The deformable portion 720 may be formed in an approximate "C" shape.

One side of the deformable portion 720 may extend from one side of the main body portion 710 parallel to the second direction to support the movable plate 600. The other side of the deformable portion 720 may be spaced apart from the main body portion 710.

The deformable portion 720 may be compressively deformed according to the movement of the movable plate 600. When the movable plate 600 moves in the direction opposite to the third direction along the terminal 300 by the pressing of the busbar coupling portion 31 inserted into the accommodating groove 510, the deformable portion 720 supporting the movable plate 600 is compressively deformed, and the other side of the deformable portion 720 spaced apart from the main body portion 710 may come into contact with the main body portion 710.

The secondary battery 20 according to the present embodiment may include the third sealing member 1100.

The third sealing member 1100 may be coupled to the terminal 300. The third sealing member 1100 may be provided to surround the perimeter of the terminal 300.

The third sealing member 1100 may be formed to have a shape extending in the third direction parallel to the central axis of the terminal 300.

The third sealing member 1100 may be interposed between each of the gasket 800 and the insulating member 500, and the terminal 300. In detail, the third sealing member 1100 passes through the insulating member 500 in the third direction so that an inner surface of the third sealing member 1100 may be in close contact with the terminal 300, and an outer surface of the third sealing member 1100 may be in close contact with the insulating member 500, the thermal insulating layer 1200 and the gasket 800.

The third sealing member 1100 may include materials such as elastically deformable rubber, silicone, plastic, and the like. The third sealing member 1100 may be an O-ring.

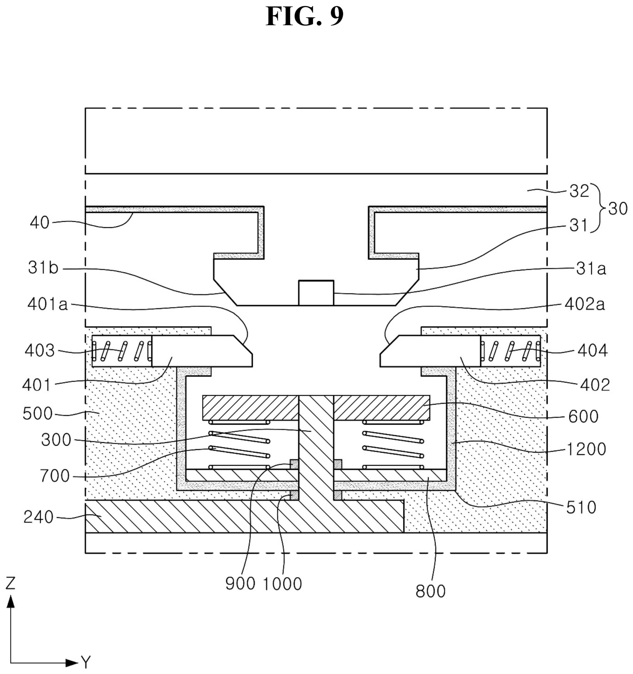

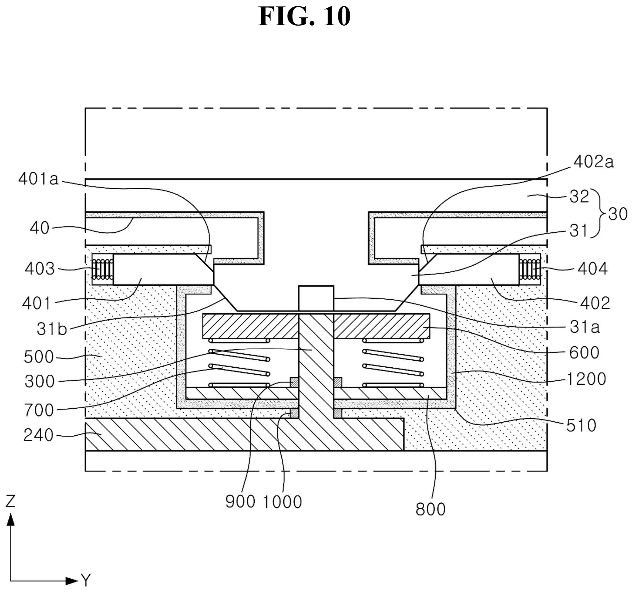

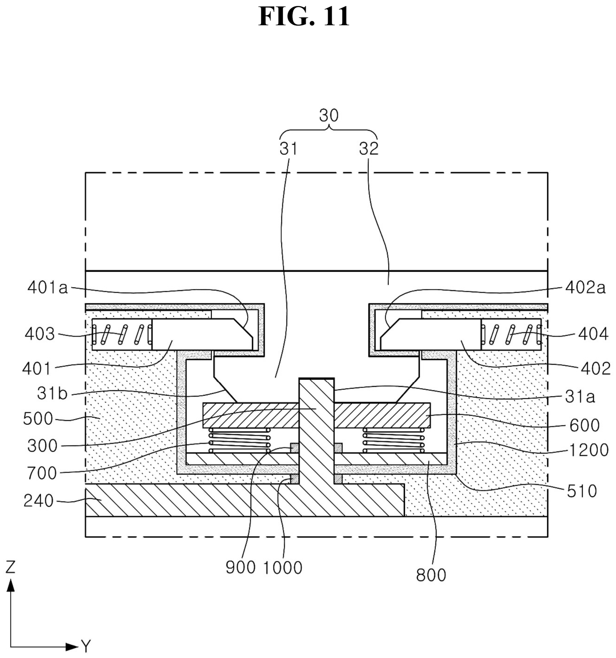

FIG. 9 is a partially enlarged cross-sectional view schematically illustrating a configuration of a secondary battery and a busbar according to a third embodiment of the present disclosure, and FIGS. 10 and 11 are partially enlarged cross-sectional views schematically illustrating a coupling process between the secondary battery and the busbar according to the third embodiment of the present disclosure.

Referring to FIGS. 9 to 11, the battery pack according to the third embodiment of the present disclosure may include a housing 10 (see FIG. 1), a secondary battery 20, and a busbar 30.

In describing the battery pack according to the third embodiment of the present disclosure, other embodiments of the cap plate 400 that are not described in the battery pack according to the first embodiment of the present disclosure or the battery pack according to the second embodiment of the present disclosure will be described.

For the remaining configuration of the battery pack according to the third embodiment of the present disclosure, the description of the battery pack according to the first embodiment of the present disclosure or the battery pack according to the second embodiment of the present disclosure may be applied as is.

The cap plate 400 according to the present embodiment may include a first plate 401 and a second plate 402.

The first plate 401 may be movably disposed in the insulating member 500. The first plate 401 may be formed to have a substantial plate-like shape. The first plate 401 may be disposed to intersect the terminal 300.

The first plate may slidably move in the insulating member 500 in the direction parallel to the second direction to partially cover the opening of the accommodating groove 510.

The second plate 402 may be movably disposed in the insulating member 500. The second plate 402 may be formed to have a substantial plate-like shape. The second plate 402 may be disposed to intersect the terminal 300.

The second plate 402 may be spaced apart from the first plate 401 and disposed to face the first plate 401. The first plate 401 and the second plate 402 may be disposed to be spaced apart in the second direction.

The second plate 402 may slidably move in the insulating member 500 in the direction parallel to the second direction to partially cover the opening of the accommodating groove 510.

The secondary battery 20 according to the present embodiment may further include a first elastic member 403 and a second elastic member 404.

The first elastic member 403 may be disposed between the first plate 401 and the insulating member 500 to elastically support the first plate 401. The first elastic member 403 may be disposed inside a groove recessed in the insulating member 500 to which the first plate 401 is slidably coupled, thereby supporting the first plate 401. The first elastic member 403 may be a coil spring.

The second elastic member 404 may be disposed between the second plate 402 and the insulating member 500 to elastically support the second plate 402. The second elastic member 404 may be disposed inside a groove recessed in the insulating member 500 to which the second plate 402 is slidably coupled, thereby supporting the second plate 402. The second elastic member 404 may be a coil spring.

A separation distance between the first plate 401 and the second plate 402 may vary depending on a direction of movement of the first plate 401 and the second plate 402 according to the present embodiment.

When the first plate 401 moves in a direction opposite to the second direction and the second plate 402 moves in the second direction, the separation distance between the first plate 401 and the second plate 402 may increase. In this case, the first elastic member 403 may be compressively deformed by the pressure of the first plate 401, and the second elastic member 404 may be compressively deformed by the pressure of the second plate 402.

When the first elastic member 403 and the second elastic member 404 are elastically restored, the first plate 401 moves in the second direction, and the second plate 402 moves in the direction opposite to the second direction, and thus the separation distance between the first plate 401 and the second plate 402 may be relatively shortened.

A separation distance between the first plate 401 and the second plate 402 parallel to the second direction when the first elastic member 403 and the second elastic member 404 according to the present embodiment are elastically restored may be smaller than a length of the busbar coupling portion 31 parallel to the second direction.

The first plate 401 according to the present embodiment may be provided with a first inclined surface 401a (e.g. at its inner rim). The first inclined surface 401a is provided on an end portion of the first plate 401 facing the second plate 402 and may be formed to be inclined at a predetermined angle toward the inside of the accommodating groove 510. An inclination direction of the first inclined surface 401a may be directed in the same direction as an inclination direction of the guide surface 31b formed on the busbar coupling portion 31.

The second plate 402 according to the present embodiment may be provided with a second inclined surface 402a (e.g. at its inner rim). The second inclined surface 402a is provided on an end portion of the second plate 402 facing the first plate 401 and may be formed to be inclined at a predetermined angle toward the inside of the accommodating groove 510. An inclination direction of the second inclined surface 402a may be directed in the same direction as the inclination direction of the guide surface 31b formed on the busbar coupling portion 31.

The first inclined surface 401a and the second inclined surface 402a may guide the movement of the busbar coupling portion 31 inserted into the interior of the accommodating groove 510 by coming into contact with the two of the guide surface 31b of the busbar coupling portion 31.

When the busbar coupling portion 31 is inserted into the interior of the accommodating groove 510, the two of the guide surface 31b of the busbar coupling portion 31 may come into contact with the first inclined surface 401a of the first plate 401 and the second inclined surface 402a of the second plate 402.

When the busbar coupling portion 31 is pressed into the interior of the accommodating groove 510 while the two of the guide surface 31b are in contact with the first inclined surface 401a and the second inclined surface 402a, the two of the guide surface 31b are slidably moved along the first inclined surface 401a and the second inclined surface 402a, and simultaneously, the first plate 401 and the second plate 402 are pushed by the movement of the busbar coupling portion 31, so that the first plate 401 moves in the direction opposite to the second direction, and the second plate 402 moves in the second direction. Accordingly, the busbar coupling portion 31 may easily enter the interior of the accommodating groove 510 and may be coupled to the terminal 300.

When the busbar coupling portion 31, which passes through a space between the first plate 401 and the second plate 402 and is inserted into the interior of the accommodating groove 510, presses the movable plate 600 so that the movable plate 600 moves in the direction opposite to the third direction, the first elastic member 403 and the second elastic member 404 are elastically restored so that the first plate 401 moves in the second direction and the second plate 402 moves in the direction opposite to the second direction.

Accordingly, the busbar coupling portion 31 inserted into the interior of the accommodating groove 510 is interfered with by the first plate 401 and the second plate 402, and thus the busbar coupling portion 31 is fixed by being caught by the first plate 401 and the second plate 402, thereby preventing the busbar coupling portion 31 from being separated from the outside of the accommodating groove 510.

According to the present disclosure, when a secondary battery is replaced, a method of disassembling an entire welding joint is omitted, and only a degraded secondary battery can be replaced, so that a busbar and a terminal of the secondary battery are detachably connected, thereby providing convenience to a worker when the secondary battery is installed and replaced.

According to the present disclosure, a welding process connecting a busbar and a terminal of the secondary battery is omitted, and thus a heat concentration phenomenon due to degradation of welding quality can be prevented.

However, the effects obtainable through the present disclosure are not limited to the above effects, and other technical effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure should be defined by the claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a case;
an electrode assembly accommodated in the case;
a terminal connected to the electrode assembly;
a cap plate facing the electrode assembly; and
an insulating member between the cap plate and the electrode assembly, the insulating member including an accommodating groove in which the terminal is accommodated.

2. The secondary battery as claimed in claim 1, further comprising:
a movable plate inside the accommodating groove, the movable plate being movably coupled to the terminal; and
an elastic member inside the accommodating groove to elastically support the movable plate.

3. The secondary battery as claimed in claim 2, further comprising a gasket seated on an inner side of the accommodating groove, the gasket supporting the elastic member.

4. The secondary battery as claimed in claim 3, further comprising a first sealing member coupled to the terminal, the first sealing member being between the gasket and the movable plate.

5. The secondary battery as claimed in claim 4, further comprising a second sealing member between the terminal and the insulating member, the second sealing member facing the electrode assembly.

6. The secondary battery as claimed in claim 3, further comprising a third sealing member between the gasket and the terminal and between the insulating member and the terminal.

7. The secondary battery as claimed in any one of the preceding claims, further comprising a thermal insulating layer on an inner surface of the accommodating groove.

8. The secondary battery as claimed in any one of the preceding claims, wherein the cap plate has an opening communicating with an inside of the accommodating groove.

9. The secondary battery as claimed in claim 8, wherein an edge of the opening includes a step portion, the step portion being elastically deformable.

10. The secondary battery as claimed in any one of the preceding claims, wherein the cap plate includes:
a first plate in the insulating member, the first plate being movable; and
a second plate facing the first plate, the second plate being spaced apart from the first plate and movable in the insulating member.

11. The secondary battery as claimed in claim 10, further comprising:
a first elastic member between the first plate and the insulating member, the first elastic member elastically supporting the first plate; and
a second elastic member between the second plate and the insulating member, the second elastic member elastically supporting the second plate.

12. The secondary battery as claimed in claim 10 or claim 11, wherein a separation distance between the first plate and the second plate varies depending on a direction of movement of the first plate and a direction of movement of the second plate.

13. The secondary battery as claimed in claim 10, claim 11 or claim 12, wherein:
the first plate includes a first inclined surface inclined at a predetermined angle toward an inside of the accommodating groove; and
the second plate includes a second inclined surface inclined at a predetermined angle toward the inside of the accommodating groove.

14. A battery pack, comprising:
a housing;
a plurality of secondary batteries inside the housing; and
a busbar connecting the plurality of secondary batteries,
wherein each of the secondary batteries includes:
a case;
an electrode assembly accommodated in the case;
a terminal connected to the electrode assembly;
a cap plate facing the electrode assembly; and
an insulating member between the cap plate and the electrode assembly, the insulating member including an accommodating groove in which the terminal is accommodated.

15. The battery pack as claimed in claim 14, wherein the busbar includes:
a busbar coupling portion in the accommodating groove, the busbar coupling portion being coupled to the terminal and elastically deformable; and
a busbar connecting portion extending from the busbar coupling portion, the busbar connecting portion connecting a neighboring busbar coupling portion.
